# EUROPÄISCHE PATENTANMELDUNG

(11) **EP 4 725 689 A1**
(43) Veröffentlichungstag der Anmeldung: **15.04.2026**
(21) Anmeldenummer: 25204732.9
(22) Anmeldetag: 25.09.2025
(51) Int. Cl.: B32B 1/08, B32B 5/02, D01F 6/60, D03D 15/283

(54) **FESTIGKEITSTRÄGER MIT RECYCELTEM ARAMID**

(30) Priorität: 09.10.2024 DE 102024209826
(71) Anmelder: ContiTech Deutschland GmbH, 30175 Hannover (DE)
(72) Erfinder: Brühne, Klaus, 30175 Hannover (DE); Witt, Erika, 34497 Korbach (DE); Tasseki, Metin, 34497 Korbach (DE); Laun, Mario, 34497 Korbach (DE); Kautz, Stephanie, 30175 Hannover (DE)
(74) Vertreter: Preusser, Andrea

(57) **Zusammenfassung**

Die Erfindung betrifft einen Festigkeitsträger (2) für einen Schlauch, wobei der Festigkeitsträger (2) recyceltes Aramid enthält.

## Beschreibung

### Technisches Gebiet

Die Erfindung betrifft einen Festigkeitsträger für einen Schlauch, wobei der Festigkeitsträger recyceltes Aramid enthält. Die Erfindung betrifft ferner einen Schlauch, der mindestens einen dieser Festigkeitsträger umfasst.

### Hintergrund der Erfindung

Die Verbesserung der Nachhaltigkeit industrieller Produkte gewinnt angesichts wachsender Umwelt- und Ressourcenanforderungen stetig an Bedeutung. Insbesondere im Bereich flexibler Schläuche, die in zahlreichen industriellen Anwendungen von der Hydraulik bis hin zu Druckluftsystemen eingesetzt werden, besteht ein großes Potenzial zur Optimierung der verwendeten Materialien. Schläuche werden häufig mit Festigkeitsträgern versehen, um mechanische Belastungen standzuhalten. Diese Festigkeitsträger tragen entscheidend zur Lebensdauer und Funktionalität des Schlauchs bei, können jedoch aus Materialien bestehen, deren Herstellung und Entsorgung erhebliche Umweltauswirkungen haben.

Ansätze zur Steigerung der Umweltverträglichkeit von Festigkeitsträgern wurden beispielsweise bereits im Bereich von Fahrzeugluftreifen vorgeschlagen (siehe WO 2011/147635 A1, WO 2023/155989 A1, WO 2023/155990 A1). Es besteht allerdings der Bedarf an verbesserten und angepassten Lösungen, insbesondere im Bereich technischer Schläuche, die eine Reduzierung des ökologischen Fußabdrucks ermöglichen, ohne dabei Einbußen in der Leistungsfähigkeit der Festigkeitsträger hinzunehmen.

Demnach besteht die Aufgabe der vorliegenden Erfindung in der Bereitstellung eines nachhaltigen Festigkeitsträgers mit hoher Leistungsfähigkeit.

### Zusammenfassung der Erfindung

In einem ersten Aspekt stellt die vorliegende Erfindung einen Festigkeitsträger für einen Schlauch bereit. Der Festigkeitsträger liegt als textiles Flächengebilde vor, ist im Wesentlichen rohrförmig ausgebildet und enthält recyceltes Aramid. Der Einsatz von recyceltem Aramid in Festigkeitsträgern ermöglicht eine Reduzierung des ökologischen Fußabdrucks bei zumindest gleichbleibenden mechanischen Eigenschaften des Festigkeitsträgers.

In einem weiteren Aspekt stellt die vorliegende Erfindung einen Schlauch bereit, der mindestens einen Festigkeitsträger des ersten Aspekts der Erfindung umfasst. Durch die Verwendung der Festigkeitsträger können nachhaltige Schläuche mit hoher Leistungsfähigkeit bereitgestellt werden.

Weitere Aspekte der vorliegenden Erfindung sind den abhängigen Ansprüchen und der detaillierten Beschreibung zu entnehmen.

### Figuren

Die beiliegenden Zeichnungen sollen Ausführungsformen der vorliegenden Erfindung veranschaulichen und ein weiteres Verständnis dieser vermitteln. Im Zusammenhang mit der Beschreibung dienen sie der Erklärung von Konzepten und Prinzipien der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander dargestellt. Gleiche, funktionsgleiche und gleich wirkende Elemente, Merkmale und Komponenten sind in den Figuren der Zeichnungen, sofern nichts anderes ausgeführt ist, jeweils mit denselben Bezugszeichen versehen.
Fig. 1: Schematische Darstellung eines beispielhaften erfindungsgemäßen Schlauches, insbesondere eines Umlageschlauches, aufgebaut aus einer Innenschicht 1 und einem Festigkeitsträger 2.
Fig. 2: Schematische Darstellung eines beispielhaften erfindungsgemäßen Schlauches, insbesondere eines Einlageschlauches, aufgebaut aus einer Innenschicht 1, einem Festigkeitsträger 2 und einer Außenschicht 3.

### Detaillierte Beschreibung der Erfindung

### Definitionen

So nicht anderweitig definiert haben hierin verwendete technische und wissenschaftliche Ausdrücke dieselbe Bedeutung, wie sie von einem Fachmann auf dem Fachgebiet der Erfindung gemeinhin verstanden wird.

Der Begriff "Festigkeitsträger" bezieht sich im Rahmen der vorliegenden auf einen Festigkeitsträger für einen Schlauch. Festigkeitsträger werden in Schläuchen eingesetzt, um sie gegen Druck- oder Zugbelastungen zu verstärken. Typischerweise können solche Festigkeitsträger Textilfasern, Kunstfasern, Metalle oder Verbundwerkstoffen enthalten und in unterschiedlichen Formen, wie Geweben, Geflechten, Gestricken oder Gewirken, in einen Schlauch integriert werden.

Der Begriff "Aramid" ist im Rahmen der vorliegenden Erfindung nicht besonderes limitiert. Wie allgemein bekannt bezeichnet ein Aramid Polyamide, bei denen die Amidgruppen an aromatische Gruppen gebunden sind. Insbesondere ist ein Aramid ein Polyamid mit aromatischen Gruppen in der Hauptkette, bei denen mindestens 85 % der Amidgruppen direkt an zwei aromatische Ringe gebunden sind. Je nach Bindungsposition des Amids am Aryl-Rest wird zwischen meta- und para-Aramiden unterschieden. Ein Beispiel für ein para-Aramid ist Poly(p-phenylenterephthalamid). Im Rahmen der vorliegenden Erfindung kann sich der Begriff "Aramid" insbesondere auf eine Aramidfaser beziehen.

Der Begriff "recyceltes Aramid" bezieht sich im Rahmen der vorliegenden Erfindung auf ein Aramid, welches aus Aramid-haltigen Abfallprodukten gewonnen wird. Im Rahmen der vorliegenden Erfindung können "recyceltes Aramid", "wiederverwertetes Aramid" und "wiederaufbereitetes Aramid" synonym verwendet werden.

Der Begriff "nicht-recyceltes Aramid" bezieht sich im Rahmen der vorliegenden Erfindung auf ein neu hergestelltes Aramid. Insbesondere bezieht sich der Begriff auf ein Aramid, welches noch nicht zuvor in Produkten verwendet oder in den Recyclingkreislauf eingebracht wurde.

Der Begriff "Filamentgarn" ist im Rahmen der vorliegenden Erfindung nicht besonders limitiert. Wie allgemein bekannt ist ein Filamentgarn ein aus Filamentfasern gebildetes Garn. Die Filamentfasern haben dabei eine Länge von mindestens 1000 mm.

Der Begriff "Filamentfaser" ist im Rahmen der vorliegenden Erfindung nicht besonders limitiert und umfasst sowohl Einzel- als auch Multifilamente. Die Begriffe "Filamentfaser" und "Filament" können im Rahmen der vorliegenden Erfindung synonym verwendet werden.

Der Begriff "Stapelfaser" ist im Rahmen der vorliegenden Erfindung nicht besonders limitiert. Wie allgemein bekannt ist eine Stapelfaser eine Faser mit einer begrenzten Länge von unter 1000 mm. Beispielsweise kann eine Stapelfaser eine Länge von 30 bis 70 mm aufweisen. Stapelfasern können durch zerschneiden bzw. zerstückeln von Filamentfasern, wie beispielsweise Aramidfasern, oder Filamentgarn hergestellt werden. Um Stapelfasergarn herzustellen, werden Stapelfasern durch Verspinnen miteinander verdreht. Aufgrund ihrer kurzen Länge müssen sie im Gegensatz zu Filamenten zu einem kontinuierlichen Faden verarbeitet werden.

Der Begriff "Umlageschlauch" bezieht sich im Rahmen der vorliegenden Erfindung auf einen Schlauch, insbesondere einen flexiblen Schlauch, der eine äußere Lage aufweist, die Festigkeitsträger enthält oder zumindest teilweise aus Festigkeitsträgern besteht. Die äußere Lage kann dabei auch als Umlage oder Umlageschicht bezeichnet werden. Innerhalb der äußeren Lage können derartige Schläuche mehrere Lagen oder Schichten aus Elastomeren, thermoplastischen Elastomeren oder Thermoplasten und Festigkeitsträgern aufweisen. Die äußere Lage mit bzw. aus Festigkeitsträgern kann als Geflecht, Gestrick, Gewirke, Gewebe oder dergleichen vorliegen.

Der Begriff "Einlageschlauch" bezieht sich im Rahmen der vorliegenden Erfindung auf einen Schlauch, insbesondere einen flexiblen Schlauch, der mit einer Innen- und einer Außenschicht aus einem polymeren Werkstoff mit elastischen Eigenschaften und einem zwischen der Innen- und Außenschicht angeordneten ein- oder mehrlagigen Festigkeitsträger versehen ist. Der Festigkeitsträger kann dabei als Geflecht, Gestrick, Gewirke, Gewebe oder dergleichen vorliegen.

Die Begriffe "Ölschlauch" und "Ölhaltige-Luft-Schlauch" beziehen sich im Rahmen der vorliegenden Erfindung auf flexible Schläuche, die zumindest in der Innenschicht 1 ölresistente Materialien umfassen oder deren Innenschicht 1 aus ölresistentem Material besteht. Alternativ oder zusätzlich kann sowohl die Innenschicht 1 als auch die Außenschicht 3 und/oder äußere Lage und gegebenenfalls weitere Schichten oder Lagen des Ölschlauchs oder Ölhaltige-Luft-Schlauchs ölresistente Materialien umfassen oder daraus bestehen. Mit ölresistenten Materialien sind Werkstoffe gemeint, die Ihre Struktur und Funktionalität bei Kontakt mit Öl oder ölhaltigen Substanzen über einen Zeitraum von mindestens 3 Jahren und insbesondere mindestens 5 Jahren im Wesentlichen beibehalten. In Betracht kommen Werkstoffe wie Nitrilkautschuk und Fluorkautschuk.

Der Begriff "Kühlwasserschlauch" bezieht sich im Rahmen der vorliegenden Erfindung auf einen flexiblen Schlauch zum Transport von Kühlwasser. Die Innenschicht 1 und Außenschicht 3 bzw. äußere Lage und gegebenenfalls weitere Schichten oder Lagen des Kühlwasserschlauchs umfassen hitze- und druckbeständige Werkstoffe, wie beispielsweise EPDM (Ethylen-Propylen-Dien-Kautschuk), oder sind aus diesen gebildet. Kühlwasserschläuche weisen typischerweise Außendurchmesser von 10 bis 100 mm und/oder Innendurchmesser von 5 bis 90 mm auf.

Der Begriff "Kraftstoffschlauch" bezieht sich im Rahmen der vorliegenden Erfindung auf einen flexiblen Schlauch zum Transport von Kraftstoff. Mit "Kraftstoff" ist hierbei insbesondere Benzin und Diesel gemeint. Zumindest die Innenschicht 1 von Kraftstoffschläuchen umfasst kraftstoff- und hitzebeständige Materialien oder ist aus diesen gebildet. Alternativ oder zusätzlich kann sowohl die Innenschicht 1 als auch die Außenschicht 3 und/oder äußere Lage und gegebenenfalls weitere Schichten oder Lagen des Kraftstoffschlauchs kraftstoff- und hitzebeständige Materialien umfassen oder daraus bestehen. Mit kraftstoff- und hitzebeständigen Materialien sind Werkstoffe gemeint, die Ihre Struktur und Funktionalität bei Kontakt mit Kraftstoff oder kraftstoffhaltigen Substanzen über einen Zeitraum von mindestens 3 Jahren und insbesondere mindestens 5 Jahren im Wesentlichen beibehalten und zugleich Temperaturen von mindestens bis zu 100 °C standhalten, ohne dass ihre Struktur und Funktionalität wesentlich beeinträchtigt wird. In Betracht kommen Werkstoffe wie Nitrilkautschuk und Fluorkautschuk.

Der Begriff "Abgasschlauch" bezieht sich im Rahmen der vorliegenden Erfindung auf einen flexiblen Schlauch zum Transport von Abgasen. Insbesondere ist im Rahmen der vorliegenden Erfindung mit Abgasschlauch ein kunststoffbasierter Abgasschlauch gemeint. Zumindest die Innenschicht 1 von Abgasschläuchen umfasst chemikalien- und hitzebeständige Materialien oder ist aus diesen gebildet. Alternativ oder zusätzlich kann sowohl die Innenschicht 1 als auch die Außenschicht 3 und/oder äußere Lage und gegebenenfalls weitere Schichten oder Lagen des Abgasschlauchs chemikalien- und hitzebeständige Materialien umfassen oder daraus bestehen. Mit chemikalien- und hitzebeständigen Materialien sind Werkstoffe gemeint, die Ihre Struktur und Funktionalität bei Kontakt mit Chemikalien und insbesondere gasförmigen Abfall- und/oder Zersetzungsprodukten über einen Zeitraum von mindestens 5 Jahren und insbesondere mindestens 10 Jahren im Wesentlichen beibehalten und zugleich Temperaturen von mindestens bis zu 150 °C standhalten, ohne dass ihre Struktur und Funktionalität wesentlich beeinträchtigt wird. In Betracht kommen Werkstoffe wie Nitrilkautschuk und Fluorkautschuk.

Ein erster Aspekt der Erfindung bezieht sich auf einen Festigkeitsträger 2, der recyceltes Aramid enthält. Die Erfinder haben überraschenderweise herausgefunden, dass recyceltes Aramid in Festigkeitsträgern 2 eingesetzt werden kann, ohne die Belastbarkeit, Stabilität und Widerstandsfähigkeit des Festigkeitsträgers zu beeinträchtigen. Aramid ist dabei insbesondere geeignet, um eine hohe Festigkeit und Temperaturstabilität des Festigkeitsträgers 2 zu erreichen, wobei der Einsatz von recyceltem Aramid dessen ressourcenschonende und damit nachhaltige Herstellung ermöglicht. Der erfindungsgemäße Festigkeitsträger 2 eignet sich insbesondere für den Einsatz in Schläuchen.

Der Festigkeitsträger 2 kann als textiles Flächengebilde vorliegen und/oder im Wesentlichen rohrförmig ausgebildet sein. "Rohrförmig" kann sich dabei auf die Form eines Hohlzylinders beziehen. "Im Wesentlichen rohrförmig" bezieht sich auf die Form eines Rohrs bzw. eines Hohlzylinders, das bzw. der in zumindest einer Richtung verzerrt oder gestaucht sein kann. Gemäß bestimmten Ausführungsformen ist der Festigkeitsträger 2 rohrförmig ausgebildet. In einigen Ausführungsformen ist das textile Flächengebilde ein Gewebe, Cordgewebe, Band, Gestrick, Gewirke, Gelege, Geflechte, Vlies, Filz oder eine Kombination davon. Gemäß bevorzugten Ausführungsformen ist das Flächengebilde ein Geflecht, Gestrick oder Gelege.

Das recyceltes Aramid kann dabei entweder kommerziell erworben (beispielsweise von Teijin Aramid, Du Pont oder proctotex) oder hergestellt werden. Die Herstellung erfolgt durch chemisches Lösen der Aramidfasern aus Aramid-haltigen Abfallprodukten und anschließendem Ausfällen des Aramids. Recyceltes Aramid weist einen geringeren PCF (*Product Carbon Footprint*) als nicht-recyceltes Aramid auf.

In bestimmten Ausführungsformen enthält das textile Flächengebilde Filamentgarn. Alternativ oder zusätzlich kann das textile Flächengebilde Stapelfasern enthalten. Gemäß einigen Ausführungsformen ist das textile Flächengebilde aus Filamentgarn gebildet. In manchen Ausführungsformen ist das textile Flächengebilde aus Stapelfasern gebildet. Dabei kann das recycelte Aramid im Filamentgarn enthalten sein. Alternativ oder zusätzlich kann das recycelte Aramid in den Stapelfasern enthalten sein. In diesen Ausführungsformen sind die oben genannten Effekte und Vorteile der Erfindung besonders ausgeprägt.

In einigen Ausführungsformen sind die Stapelfasern aus zerkleinertem und/oder zerstückeltem und/oder zerschnittenem Filamentgarn gebildet. Insbesondere können die Stapelfasern durch Zerstückelung und/oder Zerkleinerung und/oder Zerschneiden des Filamentgarns hergestellt werden. In manchen Ausführungsformen weisen die Stapelfasern eine Länge von 30 bis 70 mm auf.

In einigen Ausführungsformen enthält das Filamentgarn 2 bis 100 Gew.-%, bevorzugt 5 bis 70 Gew.-%, weiter bevorzugt 7 bis 50 Gew.-%, weiter bevorzugt 10 bis 35 Gew.-% und besonders bevorzugt 27 bis 33 Gew.-% recyceltes Aramid enthalten, bezogen auf das Gesamtgewicht des Filamentgarns. Gemäß bestimmten Ausführungsformen enthalten die Stapelfasern 2 bis 100 Gew.-%, bevorzugt 5 bis 70 Gew.-%, weiter bevorzugt 7 bis 50 Gew.-%, weiter bevorzugt 10 bis 35 Gew.-% und besonders bevorzugt 27 bis 33 Gew.-% recyceltes Aramid enthalten, bezogen auf das Gesamtgewicht der Stapelfasern. Wenn der Gehalt des recycelten Aramids in den genannten Bereichen liegt, ist die Belastbarkeit, Stabilität und Widerstandsfähigkeit des Festigkeitsträgers 2 besonders ausgeprägt.

Gemäß manchen Ausführungsformen enthält das Filamentgarn ferner 98 bis 0 Gew.-%, bevorzugt 95 bis 30 Gew.-%, weiter bevorzugt 93 bis 50 Gew.-%, weiter bevorzugt 90 bis 65 Gew.-% und besonders bevorzugt 73 bis 67 Gew.-% nicht-recyceltes Aramid, bezogen auf das Gesamtgewicht des Filamentgarns. In einigen Ausführungsformen enthalten die Stapelfasern ferner 98 bis 0 Gew.-%, bevorzugt 95 bis 30 Gew.-%, weiter bevorzugt 93 bis 50 Gew.-%, weiter bevorzugt 90 bis 65 Gew.-% und besonders bevorzugt 73 bis 67 Gew.-% nicht-recyceltes Aramid, bezogen auf das Gesamtgewicht der Stapelfasern. In diesen Ausführungsformen sind die oben genannten Effekte und Vorteile der Erfindung besonders ausgeprägt.

In manchen Ausführungsformen bestehen das Filamentgarn und/oder die Stapelfasern aus recyceltem Aramid und nicht-recyceltem Aramid. Insbesondere können sich die oben genannten Gehalte an recyceltem Aramid und nicht-recyceltem Aramid zu 100 Gew.-% addieren. Alternativ ist es bei den Stapelfasern möglich, dass sich die oben genannten Gehalte an recyceltem und nicht-recyceltem Aramid zu 5 bis 95 Gew.-% addieren. In diesen Ausführungsformen sind die oben genannten Effekte und Vorteile der Erfindung weiter ausgeprägt.

In einigen Ausführungsformen ist das recycelte und/oder nicht-recycelte Aramid ausgewählt aus Poly(p-phenylenterephthalamid), Poly(m-phenylen-isophthalamid) und Kombinationen davon.

Gemäß bestimmten Ausführungsformen handelt es sich bei dem recycelten Aramid um ein para-Aramid. Durch den Einsatz von recyceltem para-Aramid können die mechanischen Eigenschaften des Festigkeitsträgers 2 weiter verbessert werden. Alternativ oder zusätzlich handelt es sich bei dem nicht-recycelten Aramid um ein para-Aramid. Insbesondere durch eine Kombination an recyceltem und nicht-recyceltem para-Aramid kann die Leistungsfähigkeit des Festigkeitsträgers 2 weiter gesteigert werden. In manchen Ausführungsformen ist das para-Aramid Poly(p-phenylenterephthalamid).

Gemäß manchen Ausführungsformen weist das Filamentgarn eine Knotenfestigkeit von mindestens 100 N, bevorzugt mindestens 110 N auf. In einigen Ausführungsformen weist das Filamentgarn eine Knotenfestigkeit von 100 N bis 140 N, bevorzugt 110 N bis 130 N und weiter bevorzugt 113 bis 124 N auf. Dabei kann das Filamentgarn ein Längengewicht von 16,8 bis 19,0 g/100 m und/oder eine Fadendicke von 0,33 bis 0,65 mm aufweisen. Die genannte Knotenfestigkeit bezieht sich insbesondere auf ein Filamentgarn mit einem Längengewicht von 16,8 bis 19,0 g/100 m und einer Fadendicke von 0,33 bis 0,65 mm. Ein Filamentgarn, das aus nicht-recyceltem Aramid besteht, weist eine Knotenfestigkeit von weniger als 100 N auf, insbesondere bei einem Längengewicht von 16,8 bis 19,0 g/100 m und/oder einer Fadendicke von 0,33 bis 0,65 mm. Demnach kann durch die Knotenfestigkeit das Filamentgarn mit recyceltem Aramid von Filamentgarn aus nicht-recyceltem Aramid unterschieden werden. Das Längengewicht kann dabei nach DIN EN ISO 2060:1995-04 bestimmt werden. Die Fadendicke kann mit einem Dickenmessgerät (10 mm runder Stempel) mit einer digitalen Messuhr (Auflösung 0,001 mm) bestimmt werden.

Die Knotenfestigkeit wird gemäß folgendem Messverfahren bestimmt. Zur Versuchsvorbereitung wird das Filamentgarn mindestens 24 Stunden im spannungslosen Zustand bei Normalklima 20/65 klimatisiert. Normklima 20/65 bezieht sich dabei auf 20 °C und 65 % rel. Luftfeuchtigkeit. In ein Stück des Filamentgarns mit einer Länge von ca. 600 mm wird mittig ein Überhandknoten geschlagen. Die Richtung des Knotens richtet sich nach der Drehrichtung des Filamentgarns, wobei eine Z-Richtung des Filamentgarns einen S-geschlagenen Überhandknoten und eine S-Richtung des Filamentgarns einen Z-geschlagenen Überhandknoten erfordert. Das Stück mit Knoten wird in eine Zugprüfmaschine mittels pneumatischen Spannklemmen mit Umlenkung eingespannt. Die Einspannlänge beträgt 500 mm und die Prüfgeschwindigkeit 50 mm/min. Durch die Zugprüfmaschine und entsprechender Auswertesoftware wird eine Kraft-Dehnungskurve ermittelt. Die Knotenfestigkeit entspricht der maximalen Kraft in der ermittelten Kraft-Dehnungskurve.

In bestimmten Ausführungsformen weist das Filamentgarn eine Schlingenfestigkeit von mindestens 205 N, bevorzugt mindestens 210 N auf. Die Schlingenfestigkeit wird gemäß DIN 53840-1:1983-11 bestimmt. In einigen Ausführungsformen weist das Filamentgarn eine Schlingenfestigkeit von 205 N bis 240 N, bevorzugt 210 N bis 230 N und weiter bevorzugt 214 bis 225 N auf. Dabei kann das Filamentgarn ein Längengewicht von 16,8 bis 19,0 g/100 m und/oder eine Fadendicke von 0,33 bis 0,65 mm aufweisen. Die genannte Schlingenfestigkeit bezieht sich insbesondere auf ein Filamentgarn mit einem Längengewicht von 16,8 bis 19,0 g/100 m und einer Fadendicke von 0,33 bis 0,65 mm. Ein Filamentgarn, das aus nicht-recyceltem Aramid besteht, weist eine Schlingenfestigkeit von weniger als 205 N auf, insbesondere bei einem Längengewicht von 16,8 bis 19,0 g/100 m und/oder einer Fadendicke von 0,33 bis 0,65 mm. Demnach kann durch die Schlingenfestigkeit das Filamentgarn mit recyceltem Aramid von Filamentgarn aus nicht-recyceltem Aramid unterschieden werden. Das Längengewicht kann dabei nach DIN EN ISO 2060:1995-04 bestimmt werden. Die Fadendicke kann mit einem Dickenmessgerät (10 mm runder Stempel) mit einer digitalen Messuhr (Auflösung 0,001 mm) bestimmt werden.

In manchen Ausführungsformen weist das Filamentgarn eine Reißkraft von 300 N bis 320 N, gemessen nach DIN EN ISO 2062:2010-04, und/oder eine Reißdehnung von 2,9 bis 3,1 %, gemessen nach DIN EN ISO 2062:2010-04, und/oder eine Dehnung bei 90 N von 0,95 bis 1,10 % und/oder eine Dehnung bei 150 N von 1,55 bis 1,62 % auf.

Gemäß einigen Ausführungsformen weist das textile Flächengebilde eine Beschichtung auf. Die Beschichtung kann Elastomere, thermoplastischen Elastomere und/oder Thermoplaste enthalten oder daraus bestehen. Gemäß bestimmten Ausführungsformen ist das Filamentgarn mit einem Haftvermittler beschichtet.

Ein zweiter Aspekt der vorliegenden Erfindung bezieht sich auf einen Schlauch, der mindestens einen Festigkeitsträger 2 nach dem ersten Aspekt der vorliegenden Erfindung umfasst. Die obigen Ausführungen zum ersten Aspekt der Erfindung gelten hier analog.

Wie allgemein bekannt weist ein Schlauch die Form eines Hohlzylinders auf. Der Hohlraum innerhalb des Hohlzylinders kann dabei zur Leitung von Flüssigkeiten, Gasen oder festen Partikeln verwendet werden. Eine Innenschicht 1 eines Schlauches bezeichnet im Rahmen der vorliegenden Erfindung die Schicht, die dem Hohlraum innerhalb des Hohlzylinders zugewandt ist und/oder mit dem Hohlraum innerhalb des Hohlzylinders in Kontakt steht. Eine Außenschicht 3 bzw. äußere Lage eines Schlauches bezeichnet im Rahmen der vorliegenden Erfindung die Schicht bzw. die Lage, die auf der dem Hohlraum gegenüberliegenden Seite des Hohlzylinders angeordnet ist. Mit anderen Worten bezeichnet eine Außenschicht 3 bzw. äußere Lage eines Schlauches die Schicht bzw. die Lage auf der der Umgebung zugewandten Seite des Schlauches.

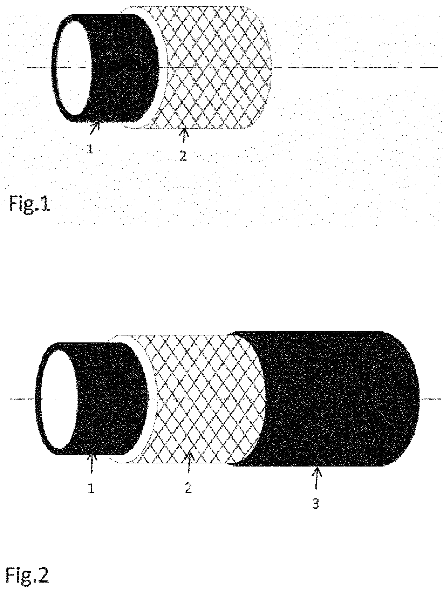

In manchen Ausführungsformen umfasst der Schlauch eine Innenschicht 1 und eine äußere Lage. Dabei ist die äußere Lage zumindest teilweise oder vollständig aus dem Festigkeitsträger 2 gebildet. In diesen Ausführungsformen ist es bevorzugt, dass das textile Flächengebilde des mindestens einen Festigkeitsträger 2 die Stapelfasern enthält oder daraus gebildet ist. Ein Schlauch gemäß dieser Ausführungsformen wird als Umlageschlauch bezeichnet. In einigen Ausführungsformen besteht der Schlauch aus der Innenschicht 1 und der äußeren Lage. Eine schematische Darstellung eines erfindungsgemäßen Umlageschlauches ist in Fig. 1 dargestellt. Die äußere Lage kann eine oder mehrere Schichten aus Elastomeren, thermoplastischen Elastomeren oder Thermoplasten und Festigkeitsträgern 2 aufweisen oder daraus bestehen.

Gemäß bestimmten Ausführungsformen umfasst der Schlauch eine Innenschicht 1 und eine Außenschicht 3, wobei der Festigkeitsträger 2 zwischen der Innenschicht 1 und Außenschicht 3 angeordnet ist. In diesen Ausführungsformen ist es bevorzugt, wenn das textile Flächengebilde des mindestens einen Festigkeitsträger 2 das Filamentgarn enthält oder daraus gebildet ist. Ein Schlauch gemäß dieser Ausführungsformen wird als Einlageschlauch bezeichnet. In einigen Ausführungsformen besteht der Schlauch aus der Innenschicht 1, dem Festigkeitsträger 2 und der Außenschicht 3. Eine schematische Darstellung eines erfindungsgemäßen Einlageschlauches ist in Fig. 1 dargestellt.

Als Material für die Innenschicht 1 und/oder Außenschicht 3 und/oder die sich in der äußeren Lage befindlichen Elastomere, thermoplastischen Elastomere oder Thermoplaste können grundsätzlich alle Elastomere, thermoplastische Elastomere oder Thermoplaste eingesetzt werden. Die Elastomere sind beispielsweise ausgewählt aus der Gruppe bestehend aus (teil)hydriertem Nitrilkautschuk (HNBR), Fluor-Kautschuk (FKM oder FPM), Polyepichlorhydrin (ECO), Ethylen-Vinylacetat-Kautschuk (EVA), Acrylat-Kautschuk (ACM), Ethylen-Acrylat-Kautschuk (AEM), Silikonkautschuk (MQ, VMQ, PVMQ, FVMQ), fluoriertem Methylsilikonkautschuk (MFQ), perfluoriertem Propylen-Kautschuk (FFPM), Perfluorcarbon-Kautschuk (FFKM) und Ethylen-Propylen-Dien-Kautschuk (EPDM). Die genannten Elastomere können alleine oder im Verschnitt mit wenigstens zwei Elastomeren eingesetzt werden. Ebenso ist es möglich, die Elastomere im Verschnitt mit thermoplastischen Elastomeren und/oder Thermoplasten zu verwenden. Als thermoplastisches Elastomer findet vorzugsweise wenigstens ein thermoplastisches Elastomer mit Polycarbonatanteil (TPE-C) Verwendung. Die genannten Materialien können ebenfalls in der oben genannten Beschichtung des Festigkeitsträgers eingesetzt werden.

Der erfindungsgemäße Schlauch kann neben der Innenschicht 1, der Außenschicht 3 und/oder der äußeren Lage eine oder mehrere weitere Lagen oder Schichten aus Elastomeren, thermoplastischen Elastomeren oder Thermoplasten enthalten. Als Materialien kommen die in Betracht, die vorstehend für die Innenschicht 1 und Außenschicht 3 genannt sind.

Es ist erfindungsgemäß möglich, den Festigkeitsträger 2 des ersten Aspekts in einen Schlauch des Standes der Technik zu integrieren, beispielsweise durch Austausch des Festigkeitsträgers des Schlauches des Standes der Technik durch einen Festigkeitsträger 2 nach dem ersten Aspekt der vorliegenden Erfindung. Damit kann ein Schlauch gemäß dem zweiten Aspekt der vorliegenden Erfindung erhalten werden. Geeignete Umlageschläuche sind beispielsweise in EP 3 482 927 A1, EP 2 175 977 A1, EP 3 383 636 A1, EP 3 383 637 A1 und EP 3 915 773 A1 beschrieben. Geeignete Einlageschläuche sind beispielsweise in WO 2012/000713 A1, DE 10 2008 037 417 A1, EP 2 529 140 A1 und EP 2 345 534 A1 beschrieben.

Gemäß bestimmten Ausführungsformen ist der Schlauch ein Ölschlauch, Ölhaltige-Luft-Schlauch, Kühlwasserschlauch, Abgasschlauch, Kraftstoffschlauch, Förderschlauch, Flachschlauch, Wasserschlauch, Hochdruckzulaufschlauch, Pressluftschlauch, Kompressorschlauch, Vakuumschlauch, Autogenschlauch, Allbrenngasschlauch, Stickstoffschlauch, Propangasschlauch, Kältemittelschlauch, Feuerlöschschlauch, Kraftstoffschlauch, Schweißschlauch, Chemieschlauch, Pharmaschlauch, Lebensmittelschlauch, Dampfschlauch, Beton- und Mörtelförderschlauch, Baggerschlauch, Schwimmschlauch oder Fahrzeugschlauch. In manchen Ausführungsformen ist der Schlauch ein Flachschlauch, Vakuumschlauch, Autogenschlauch, Allbrenngasschlauch, Stickstoffschlauch, Propangasschlauch, Kältemittelschlauch, Feuerlöschschlauch, Chemieschlauch, Pharmaschlauch, Lebensmittelschlauch, Dampfschlauch, Beton- und Mörtelförderschlauch, Baggerschlauch oder Schwimmschlauch. Gemäß bestimmten Ausführungsformen ist der Schlauch ein Kraftstoffschlauch, insbesondere ein Kraftstoffpartikelfilterschlauch. In einigen Ausführungsformen ist der Schlauch ein Abgasschlauch. Gemäß manchen Ausführungsformen ist der Schlauch ein Ölschlauch, ein Ölhaltige-Luft-Schlauch oder ein Kühlwasserschlauch und insbesondere ein Ölschlauch oder Kühlwasserschlauch.

### Beispiele

Die Erfindung wird im Anschluss mit Bezug auf verschiedene Beispiele davon weiter im Detail erläutert. Die Erfindung ist jedoch nicht auf diese Beispiele beschränkt.

Es wurden die für Festigkeitsträger relevanten Parameter eines Aramid-Filamentgarns aus nicht-recyceltem Aramid und eines Aramid-Filamentgarns mit 30 Gew.-% recyceltem Aramid bestimmt. Die Filamentgarne wiesen jeweils ein Längengewicht zwischen 16,8 und 19,0 g/100 m, gemessen nach DIN EN ISO 2060:1995-04, und eine Fadendicke zwischen 0,33 und 0,65 mm, gemessen mit einem Dickenmessgerät (10 mm runder Stempel) mit einer digitalen Messuhr (Auflösung 0,001 mm), auf. Die Reißkraft und Reißdehnung wurde gemäß DIN EN ISO 2062:2010-04 bestimmt. Die Schlingenfestigkeit wurde gemäß DIN 53840-1:1983-11 bestimmt. Die Knotenfestigkeit wurde nach oben beschriebenen Messverfahren bestimmt. Die Ergebnisse sind in Tabelle 1 dargestellt. In der Spalte "Spezifikation" sind die Wertebereiche angegeben, die erfüllt sein müssen, damit ein Filamentgarn in Festigkeitsträgern optimal eingesetzt werden kann.

**Tabelle 1: Vergleich der Prüfmerkmale eines Aramid-Filamentgarns aus nicht-recyceltem Aramid und eines Aramid-Filamentgarns mit 30 Gew.-% recyceltem Aramid.**

| Prüfmerkmal | Filamentgarn aus nicht-recyceltem Aramid | | | Filamentgarn mit 30 Gew.-% Recyclinganteil | | | Spezifikation |
|---|---|---|---|---|---|---|---|
| | x | min | max | x | min | max | |
| Reißkraft [N] | 310,1 | 298,7 | 331,4 | 306,4 | 300,2 | 318,4 | mind. 250; opt. 309 |
| Reißdehnung [%] | 3,0 | 2,9 | 3,2 | 3,0 | 2,9 | 3,1 | 1,9 - 3,9 |
| Dehnung bei 90 N [%] | 0,97 | 0,96 | 0,99 | 1,00 | 0,99 | 1,00 | 0,2 - 1,4 |
| Dehnung bei 150 N [%] | 1,55 | 1,54 | 1,57 | 1,59 | 1,57 | 1,60 | 0,8 - 2,0 |
| Kraft bei 1% Dehnung [N] | 92,7 | 91,3 | 94,0 | 90,3 | 89,9 | 91,3 | - |
| Drehung Garn / Drehrichtung Z [t/m] | 127 | 124 | 130 | 125 | 122 | 128 | 100 - 140 |
| Knotenfestigkeit [N] | 77 | 71 | 83 | 117 | 113 | 124 | - |
| Schlingenfestigkeit [N] | 195 | 185 | 203 | 220 | 214 | 225 | - |
| Schrumpfung 10 min/160 °C [%] | 0,0 | 0,0 | 0,0 | 0,1 | 0,0 | 0,1 | max. 0,5 |
| Schrumpfkraft 2 min/160 °C [N] | 1,3 | 1,2 | 1,4 | 1,3 | 1,2 | 1,3 | max. 3,4; opt. 1,3 |

Wie aus der Tabelle 1 ersichtlich ist, erfüllt das Filamentgarn mit 30 Gew.-% recyceltem Aramid alle Vorgaben hinsichtlich der Eignung für die Anwendung in einem Festigkeitsträger. Zudem weist das Filamentgarn mit 30 Gew.-% Recyclinganteil eine höhere Knotenfestigkeit und Schlingenfestigkeit als das Filamentgarn aus nicht-recyceltem Aramid auf.

### BEZUGSZEICHENLISTE

- 1: Innenschicht
- 2: Festigkeitsträger
- 3: Außenschicht

## Patentansprüche

1. Festigkeitsträger (2) für einen Schlauch, wobei der Festigkeitsträger (2) als textiles Flächengebilde vorliegt und im Wesentlichen rohrförmig ausgebildet ist,
**dadurch gekennzeichnet,**
**dass** der Festigkeitsträger (2) recyceltes Aramid enthält.

2. Festigkeitsträger (2) nach Anspruch 1, wobei das textile Flächengebilde Filamentgarn und/oder Stapelfasern enthält oder aus Filamentgarn und/oder Stapelfasern gebildet ist, wobei das Filamentgarn und/oder die Stapelfasern das recycelte Aramid enthalten, optional wobei die Stapelfasern aus zerkleinertem Filamentgarn gebildet sind.

3. Festigkeitsträger (2) nach Anspruch 2, wobei das Filamentgarn und/oder die Stapelfasern 2 bis 100 Gew.-%, bevorzugt 5 bis 70 Gew.-% und weiter bevorzugt 10 bis 35 Gew.-% recyceltes Aramid enthalten, bezogen auf das Gesamtgewicht des Filamentgarns und/oder der Stapelfasern.

4. Festigkeitsträger (2) nach Anspruch 2 oder 3, wobei das Filamentgarn und/oder die Stapelfasern ferner 98 bis 0 Gew.-%, bevorzugt 95 bis 30 Gew.-% und weiter bevorzugt 90 bis 65 Gew.-% nicht-recyceltes Aramid enthalten, bezogen auf das Gesamtgewicht des Filamentgarns und/oder der Stapelfasern, optional wobei das Filamentgarn und/oder Stapelfasern aus recyceltem und nicht-recyceltem Aramid bestehen.

5. Festigkeitsträger (2) nach einem der vorstehenden Ansprüche, wobei es sich bei dem recycelten und/oder nicht-recycelten Aramid um ein para-Aramid handelt.

6. Festigkeitsträger (2) nach einem der vorstehenden Ansprüche, wobei das Filamentgarn eine Knotenfestigkeit von mindestens 100 N und/oder eine Schlingenfestigkeit von mindestens 205 N, gemessen gemäß DIN 53840-1:1983-11, aufweist.

7. Schlauch, umfassend mindestens einen Festigkeitsträger (2) nach einem der Ansprüche 1 bis 6.

8. Schlauch nach Anspruch 7, wobei der Schlauch ferner eine Innenschicht (1) und eine äußere Lage umfasst, wobei die äußere Lage zumindest teilweise oder vollständig aus dem Festigkeitsträger (2) gebildet ist, optional wobei das textile Flächengebilde des mindestens einen Festigkeitsträger (2) die Stapelfasern enthält oder daraus gebildet ist.

9. Schlauch nach Anspruch 7, wobei der Schlauch ferner eine Innenschicht (1) und eine Außenschicht (3) umfasst, wobei der Festigkeitsträger (2) zwischen der Innenschicht (1) und Außenschicht (3) angeordnet ist, optional wobei das textile Flächengebilde des mindestens eine Festigkeitsträger (2) das Filamentgarn enthält oder daraus gebildet ist.

10. Schlauch nach einem der vorstehenden Ansprüche, wobei der Schlauch ein Kraftstoffschlauch, Abgasschlauch, Ölschlauch oder Kühlwasserschlauch ist.
